Europäisches Patentamt

European Patent Office

Office européen des brevets

(11) Veröffentlichungsnummer: **0 501 201 A1**

# EUROPÄISCHE PATENTANMELDUNG

(21) Anmeldenummer: **92102050.9**

(22) Anmeldetag: **07.02.92**

(51) Int. Cl.5: **F16B 13/00**, F16B 37/12, F16B 25/10, B25B 13/48

(30) Priorität: **28.02.91 DE 4106467**
**22.10.91 DE 9113137 U**

(43) Veröffentlichungstag der Anmeldung:
**02.09.92 Patentblatt 92/36**

(84) Benannte Vertragsstaaten:
**AT BE CH DE DK ES FR GB GR IT LI NL SE**

(71) Anmelder: **ALLFA DÜBEL GmbH**
**Werftstrasse 13**
**W-4650 Gelsenkirchen(DE)**

(72) Erfinder: **Tkocz, Horst**
**Uranusstrasse 9**
**W-4240 Emmerich(DE)**

(74) Vertreter: **Zenz, Joachim Klaus, Dipl.-Ing. et al**
**Patentanwälte Zenz, Helber & Hosbach Am**
**Ruhrstein 1**
**W-4300 Essen 1(DE)**

(54) **Bausatz zum Eindrehen von Dübeln in poröses Material.**

(57) Der Bausatz umfaßt einen Kunststoffdübel (1) mit einem Außengewinde (10), einen Bohrer zum Vorbohren des Dübeleinsatzlochs in einer Platte (3) bröckeligem Werkstoff und ein Eindrehwerkzeug (21), das mit dem Dübel drehfest kuppelbar ist. Zur Minimierung des Materialeinsatzes sowie des Montageaufwandes ist der Bohrer unmittelbar am Eindrehwerkzeug (2) ausgebildet. Letzteres hat einen Schaft (23) zum Ansetzen eines Antriebswerkzeugs einen daran anschließenden Kupplungsabschnitt (22) zur Übertragung der Eindrehkräfte auf den Dübel (1) und einen den Bohrer bildenden Bohrabschnitt (20). Zwischen Kupplungsabschnitt (22) und Antriebsabschnitt (23) ist ein Endanschlag (26) zur Begrenzung der Einstecktiefe des Werkzeugs (2). Die gemeinsame axiale Länge von Kupplungsabschnitt und Bohrabschnitt ist etwa doppelt so groß wie die axiale Länge des Dübels (1), damit das Bohrloch vollständig vorgebohrt ist, bevor der Dübel mit dem Werkzeug (2) eingedreht wird.

Fig.1

EP 0 501 201 A1

Die Erfindung bezieht sich auf einen Bausatz zum Eindrehen von Dübeln in poröses und/oder bröckeliges Material, insbesondere Material auf der Basis von Gips, Schaumstoffen oder Gasbeton, mit einer Dübel-Einsatzbuchse, an deren Umfang ein Gewinde angeformt ist, einem Bohrer zum Vorbohren des Dübeleinsatzlochs und einem Eindrehwerkzeug, das in eine Axialbohrung des Dübels einsetzbar und drehfest mit dem Dübel kuppelbar ist.

Aus der EP-PS 165 674 ist eine Einsatzbuchse für poröse Wände, beispielsweise für "Drywall" oder "Sheetrock"-Wände bekannt, die einen etwa zylindrischen Hohlkörper 13 mit einem flanschförmigen Endanschlag, einem Außengewinde und einem angeformten Bohrende aufweist. Das Eindrehwerkzeug wird auf den mit der Bohrspitze kombinierten Dübel aufgesetzt und dient der Übertragung von Drehkräften auf den Dübel und über diesen auf dessen Bohrspitze. Die einteilige Ausbildung von Bohrende und mit Außengewinde versehener Einsatzbuchse bedingt eine entsprechend verstärkte Ausbildung des gesamten Dübels und/oder dessen Ausbildung aus einem ausreichend festen und zum Bohren geeigneten Material. Diese bekannte Dübelsetzvorrichtung ist nur dann mit wirtschaftlich vertretbarem Aufwand einsetzbar, wenn das Material der Wand, in die der Dübel einzudrehen ist, ähnlich geschäumtem Polystyrol nicht nur porös und bröckelig, sondern auch relativ weich ist und daher selbst von billigen Bohrwerkzeugen durchdrungen werden kann. Bei härteren Bauplatten oder Wänden, beispielsweise solchen aus Gasbeton, besteht die Gefahr, daß sich die mit hohen Torsionskräften belastete Bohrspitze an der Übergangsstelle zum Einsatzkörper abdreht und dadurch ihre Bohrfunktion verliert.

Der Erfindung liegt die Aufgabe zugrunde, den eingangs genannten Bausatz so zu verbessern, daß ein Eindrehen des Dübels selbst in relativ harte poröse Wände mit geringem Montageaufwand und minimalem Materialeinsatz möglich ist.

Gelöst wird diese Aufgabe bei einem Bausatz der eingangs genannten Gattung erfindungsgemäß dadurch,

daß der Bohrer mit dem Eindrehwerkzeug einteilig ausgebildet ist und eine solche Querschnittsausbildung hat, daß er durch die Axialöffnung des Dübels durchsteckbar ist,

daß das Eindrehwerkzeug einen Endanschlag zur Begrenzung seiner Einstecktiefe in den Dübel, einen der Übertragung der Eindrehkräfte auf den Dübel dienenden Kupplungsabschnitt und einen den Bohrer bildenden Bohrabschnitt aufweist und

daß die axiale Länge des Eindrehwerkzeugs zwischen Endanschlag und Bohrspitze derart auf die axiale Länge des Dübels abgestimmt ist, daß der Bohrabschnitt aus dem Vorderende des Dübels axial vorsteht, wenn der Endanschlag an dem entgegengesetzten Dübelende in Anlage steht.

Gegenüber dem bekannten, selbstschneidenden Dübel zeichnet sich der Erfindungsgegenstand aus durch einen wesentlich geringeren Materialeinsatz; die Bohrfunktion wird durch das mehrfach benutzbare Eindrehwerkzeug übernommen. Dementsprechend kann auch der Dübel selbst aus einem einfachen Kunststoffmaterial bestehen, das über das Außengewinde einen ausgezeichneten Ausziehwiderstand gewährleistet. Bei der Montage des Kunststoffdübels in der Wand bzw. der Bauplatte wird die Einsatzbuchse des Dübels dem wiederverwendbaren Eindrehwerkzeug, genauer gesagt, dessen Kupplungsabschnitt, aufgesteckt, und danach bildet der Bausatz eine Baueinheit, die bis zum endgültigen Eindrehen des Dübels in die betreffende Wand unverändert erhalten bleibt. Diese Baueinheit ist sogar besonders leicht handhabbar, da eine relative Lageveränderung zwischen Zusammenstecken und Setzen des Dübels praktisch nicht möglich ist. Andererseits läßt sich das Eindrehwerkzeug aber problemlos axial nach hinten aus dem gesetzten Dübel herausziehen und an einer anderen Einsatzstelle wiederverwenden.

Aus montagetechnischen Gründen sollte entsprechend einer Weiterbildung der Erfindung der Bohrabschnitt aus dem Dübel um mindestens dessen axiale Länge vorstehen, wenn die Anschlagstellung erreicht ist. Ein größerer Überhang des Bohrabschnitts ist in der Regel unschädlich, so daß ein und dasselbe Eindrehwerkzeug bei entsprechend langer Ausbildung des Bohrabschnitts in Verbindung mit Dübel-Einsatzbuchsen stark unterschiedlicher Längen verwendet werden kann.

Der Kupplungsabschnitt des Eindrehwerkzeugs ist vorzugsweise kürzer als die axiale Länge des Dübels. Selbst kurze Kupplungsabschnitte können die Drehmomente übertragen. Wesentlich ist, daß der Kupplungsabschnitt nicht länger ist als die Länge des zum Bausatz gehörigen Dübels.

Für die drehfeste Kupplung zwischen dem Kupplungsabschnitt des Eindrehwerkzeugs und dem Dübel reicht es an sich, wenn der Kupplungsabschnitt über wenigstens eine achsparallele Abflachung verfügt, die mit einer entsprechend geformten und angeordneten Abflachung in der Dübelbohrung zusammenwirkt. In vorteilhafter Weiterbildung ist jedoch vorgesehen, daß der Dübel mit mindestens zwei diametral gegenüberliegenden achsparallelen Innennuten zum formschlüssigen Eingriff von zwei korrespondierenden Federn des Kupplungsabschnitts versehen ist. Die axiale Öffnung des Dübels kann jedoch auch einen etwa kreuzförmigen freien Querschnitt haben, an den der Außenumfang des Kupplungsabschnittes angepaßt ist. Die Außenflächen und damit der Bohrdurchmesser können in einer achsparallelen Linie mit den Federscheiteln des Kupplungsabschnitts liegen und sind daher relativ einfach herzustellen.

Die axiale Öffnung des Dübels hat in einer Weiterbildung der Erfindung einen etwa kreuzförmigen freien Querschnitt, an den der Außenumfang des Kupplungsabschnitts angepaßt ist.

Ein besonders hoher Ausziehwiderstand läßt sich in einer Weiterbildung der Erfindung dadurch erreichen, daß der Außendurchmesser des Gewindes mehr als doppelt so groß wie der Außendurchmesser der Einsatzbuchse ist.

Der Dübel ist vorzugsweise als Kunststoff-Spritzgießteil ausgebildet, da dieses Material besonders preiswert und einfach auszuformen ist.

Das mehrfach wiederverwendbare Eindrehwerkzeug besteht dagegen vorzugsweise aus metallischem Werkstoff. Entsprechend hoch vergütetes Material ermöglicht eine Vielzahl von Schneidvorgängen und damit eine besonders große Lebensdauer des Eindrehwerkzeugs.

Das Eindrehwerkzeug selbst hat einen an den Kupplungsabschnitt anschließenden Antriebsabschnitt, an den ein Antriebswerkzeug, z.B. ein Schraubendreher oder Bohrfutter ankuppelbar ist. Der Antriebsabschnitt kann als Mehrkant, vorzugsweise als Sechskant ausgebildet, auf der Eindrehachse des Werkzeugs zentriert und zumindest partiell über den anschließenden Kupplungsabschnitt seitlich vorstehend angeordnet sein, wodurch der Endanschlag gebildet ist.

Andererseits kann jedoch der Antriebsabschnitt des Eindrehwerkzeugs auch T-förmig ausgebildet sein, wodurch ein gesondertes Antriebswerkzeug überflüssig wird.

Der zum beschriebenen Bausatz gehörige Dübel braucht, wie oben gesagt, eine mit wenigstens einer Abflachung am Kupplungsabschnitt des Eindrehwerkzeugs zusammenwirkende achsparallele Kupplungsfläche zur Übertragung der Drehmomente beim Eindrehen des Dübels. Außerdem muß die axiale Öffnung eine Durchgangsöffnung sein, die einem beispielsweise klingenförmig ausgebildeten Bohrwerkzeug den Durchtritt ermöglicht und am Austrittsende des Bohrwerkzeugs möglichst dünnwandig ist. Das der Drehmomentübertragung dienende Bohrungsinnenprofil des Dübels braucht sich nicht bis zum äußersten Dübelende zu erstrekken; in diesem äußersten Endbereich kann der Dübel so dünn sein, daß er sich auch bei im wesentlichen rundem Querschnitt der Form des dort austretenden Bohrwerkzeugs anpaßt.

Das erfindungsgemäße Eindrehwerkzeug zeichnet sich dadurch aus, daß es einen Bohrabschnitt mit einer Zentrierspitze, einen anschließenden Kupplungsabschnitt mit wenigstens einer achsparallelen Abflachung und einen Schaft und/oder Antriebsabschnitt aufweist und daß an der Übergangsstelle zwischen Kupplungs- und Schaftabschnitt ein radialer Anschlag zur Begrenzung der axialen Einstecktiefe des Werkzeugs ausgebildet ist.

Im folgenden wird die Erfindung anhand eines in der Zeichnung dargestellten Ausführungsbeispiels näher erläutert. In der Zeichnung zeigen:

Fig. 1 eine axiale Schnittansicht durch ein Ausführungsbeispiel einer erfindungsgemäßen Baueinheit aus einem in eine Polystyrolwand eingedrehten Dübel und einem einen Bohrer aufweisenden Eindrehwerkzeug am Ende der Dübelmontage;

Fig. 2A eine Seitenansicht des im Bausatz gemäß Fig. 1 verwendeten Eindrehwerkzeugs;

Fig. 2B eine Axialansicht auf die Bohrspitze des Eindrehwerkzeugs gemäß Fig. 2A;

Fig. 3 eine Stirnansicht auf den in Fig. 1 verwendeten Dübel; und

Fig. 4 eine Ansicht entsprechend Fig. 1 nach dem Herausziehen des Eindrehwerkzeugs, dem Einschrauben einer Befestigungsschraube in den zuvor montierten Dübel und dem Festlegen einer Montageplatte.

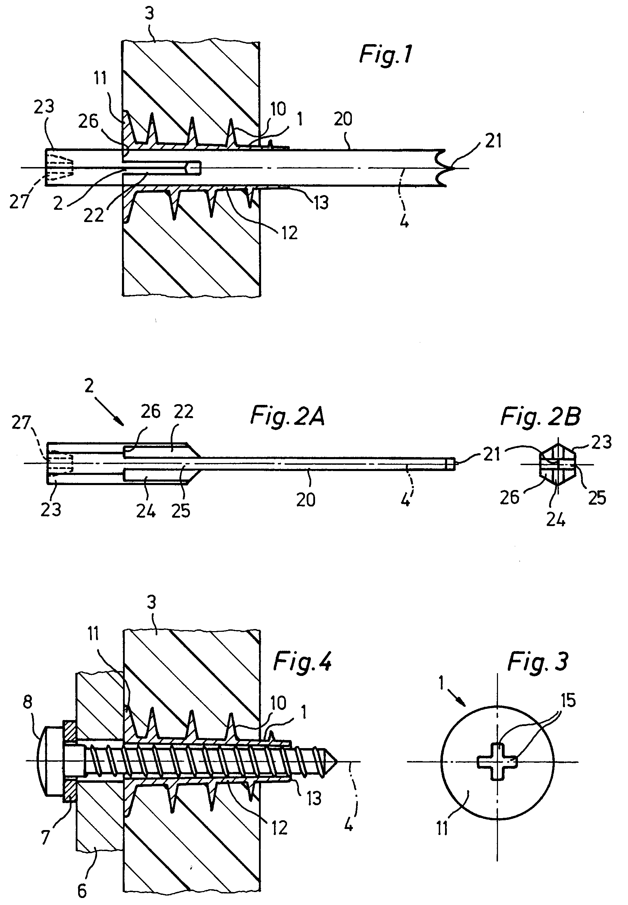

In der Darstellung gemäß Figur 1 ist ein Ausführungsbeispiel des erfindungsgemäßen Bausatzes, bestehend aus einem Kunststoffdübel 1 mit Außengewinde und einem Eindrehwerkzeug 2 mit integriertem Bohrer, in der Montage-Endstellung in einer Platte 3 aus porösem und/oder bröckligem Material, beispielsweise geschäumtem Polystyrol, gezeigt.

Der in herkömmlicher Weise als Kunststoff-Spritzgießteil ausgebildete Dübel 1 hat in dem dargestellten Ausführungsbeispiel ein Außengewinde 10 mit messerartigen Gewindegängen, die sich beim Eindrehen des Dübels in das bröcklige und nachgiebige Material der Platte 3 einschneiden. Am hinteren Ende ist der Dübel begrenzt durch einen Flansch 11. Der eigentliche Dübelkörper wird durch eine leicht konische Einsatzbuchse 12 gebildet, die an dem dem Flansch 11 entgegengesetzten Dübelende in eine dünnwandige Schürze 13 ausläuft. Der Dübel 1 hat, wie Figur 3 zeigt, eine Axialöffnung 14 mit einem kreuzförmigen Querschnittsprofil. Die Flanken der achsparallelen Dübelnuten 15 bilden die für die Übertragung von Drehmomenten um die Dübelachse 4 erforderlichen Dübelabflachungen. Die Tiefe der Dübelnuten 15 kann abnehmen von dem Flanschende 11 in Richtung auf die Schürze 13 und ggf. in die Schürze auslaufen.

Das in Figur 2 separat dargestellte Eindrehwerkzeug 2 ist aus metallischem Werkstoff hergestellt und hat einen Bohrabschnitt 20 mit einer Bohrspitze 21, einen Kupplungsabschnitt 22 und einen Schaft- bzw. Antriebsabschnitt 23. Die Bohrspitze ist mit einer axialen Zentrierung nach Art eines Holzbohrers versehen. Die Länge des Bohrabschnitts 20 ist so groß bemessen, daß die Bohrspitze 21 aus der den Dübel 1 aufnehmenden Platte 3 austritt, bevor das Dübelvorderende 13 oder zumindest der erste Gang des Gewindes 10 in die Frontseite der Platte 3 eintritt. Der Kupplungsabschnitt 22 hat ein kreuzförmiges Umfangsprofil, das dem kreuzförmigen freien Innenprofil mit den Nuten 15 in der Axialöffnung 14 des Dübels 1 entspricht. Die parallel zur Dübel- bzw. Werkzeugachse 4 verlaufenden Federn 24, 25 schmiegen sich in der Einsatzstellung des Eindrehwerkzeugs (Figur 1) an die achsparallelen Flanken der Dübelnuten 15 und können dadurch Drehmomente auf den Dübel 1 übertragen. Die Länge des Kupplungsabschnitts 22 ist, wie Figur 1 zeigt, kürzer als die Einstecklänge der Einsatzbuchse 12. Das Eindrehwerkzeug 2 hat bei dem in den Figuren 1 und 2A dargestellten Ausführungsbeispiel einen klingenförmigen Bohrer mit zur Achse 4 parallel verlaufenden Außenkanten. Im Bereich des Kupplungsabschnitts 22 bilden die beiden diametral gegenüberliegenden Ränder der eigentlichen Bohrklinge zwei einander diametral gegenüberliegende Federn 25 zum Eingriff in die Dübelnuten 15.

Der in der Montage-Endstellung (Figur 1) aus dem Dübel 1 und der Platte 3 nach außen vorstehende Schaftabschnitt 23 hat einen sechskantigen Außenumfang (Figur 2B). Der Durchmesser des sechskantigen Schaftabschnitts 23 ist dem Maximaldurchmesser des Kupplungsabschnitts 22 im Bereich der Feder 24 und 25 angepaßt. An der Übergangsstelle zwischen den Abschnitten 22 und 23 sind aber radiale Anschlagsflächen 26 gebildet, die die Einschubbewegung des Eindrehwerkzeugs 2 in den Dübel 1 durch Anschlag an der Frontfläche des Flansches 11 begrenzen. An der äußeren Stirnseite des Schaftabschnitts 23 ist in dem dargestellten Ausführungsbeispiel ein Kreuzschlitz zum Ansetzen eines geeigneten Schrauben- bzw. Kreuzschraubendrehers ausgebildet. Alternativ kann der ähnlich einem Bit geformte Schaftabschnitt 23 aber auch in ein geeignetes Bohrfutter einer Bohrmaschine eingesetzt werden, um das Eindrehwerkzeug beim Bohren des Durchgangslochs in der Bauplatte 3 und beim Eindrehen des mit dem Kupplungsabschnitt 22 gekuppelten Dübels 1 maschinell anzutreiben. Mit Hilfe des Bohrfutters kann das Eindrehwerkzeug nach Beendigung der Montage des Dübels 1 in der Platte auch wieder axial aus der Dübelöffnung 14 herausgezogen werden, so daß der gesetzte Dübel 1 zum Einschrauben eines geeigneten Befestigungselements offen ist.

Es ist klar, daß die Form der Bohrspitze bzw. des gesamten Bohrabschnitts 20 sowie des Kupplungsabschnitts 22 und nicht zuletzt des Schaftschnitts 23 des Eindrehwerkzeugs in vielfacher Hinsicht modifiziert werden kann. Wesentlich ist, daß ein zur Aufnahme der Einsatzbuchse 12 geeignetes Loch in die Platte bzw. Wand 3 gebohrt wird, bevor die funktionswesentlichen Teile des Dübels 1 in die Bohröffnung der Wand eindringen, und daß sich das Eindrehwerkzeug 2 nach Erreichen der Montage-Endstellung (Figur 1) problemlos aus dem gesetzten Dübel 1 herausziehen läßt. Da der beschriebene Bausatz besonders vorteilhaft zum Einschrauben von Dübeln in Leichtbauplatten 3 verwendbar ist, kann der Kupplungsabschnitt 22 eine klingenartige Ausbildung in Fortsetzung der Bohrerklinge 20 haben. Mit anderen Worten, die Federn 24 (Fig. 2A, B) können entfallen. Der Schaftabschnitt 23 kann auch bei dem für eine Vielzahl von Dübeln 1 wiederverwendbaren Eindrehwerkzeug 2 als T-Griff ausgebildet oder mit einem solchen gekuppelt werden, wodurch das Eindrehwerkzeug 2 zu einem Handwerkzeug wird. Ein ähnlicher Effekt läßt sich dadurch erreichen, daß der Antriebsabschnitt 23 in eine axiale Steckaufnahme eines Handgriffes eingesteckt wird. Das Werkzeug kann auch als Doppelwerkzeug entweder mit zwei gleichen Kupplungs- und Bohrabschnittspaaren zu beiden Seiten des Antriebsabschnitts 22 oder mit einem herkömmlichen Schraubendreher an einem Ende und der Bohrer/Kupplungsabschnittskombination am anderen Ende ausgebildet sein.

Figur 4 zeigt ein Einbaubeispiel des Dübels 1 in der Wand 3 nach Anschluß einer Montageplatte 6, einer Unterlegscheibe 7 und Befestigung durch eine herkömmliche dübelgerechte Schraube 8.

**Patentansprüche**

1. Bausatz zum Eindrehen von Dübeln in Platten aus porösem und/oder bröckligem Material, insbesondere solchen auf der Basis von Gips, Schaumstoff oder Gasbeton,

   mit einer Dübel-Einsatzbuchse (12), an deren Umfang ein Außengewinde (10) angeformt ist,

   einem Bohrer (20) zum Vorbohren des Dübel-Einsatzlochs und

   einem Eindrehwerkzeug (2), das in die Axialöffnung (14) des Dübels (1) einsetzbar und drehfest mit dem Dübel kuppelbar ist,

   **dadurch gekennzeichnet,**

   daß der Bohrer (20) mit dem Eindrehwerkzeug (2) einteilig ausgebildet ist und eine solche Querschnittsausbildung hat, daß er durch die Axialöffnung (14) des Dübels (1) durchsteckbar ist,

   daß das Eindrehwerkzeug einen Endanschlag (26) zur Begrenzung seiner Einstecktiefe in den Dübel (1), einen der Übertragung der Eindrehkräfte auf den Dübel dienenden Kupplungsabschnitt (22) und einen den Bohrer bildenden Bohrabschnitt (20) aufweist und

daß die axiale Länge des Eindrehwerkzeugs derart auf die axiale Länge des Dübels abgestimmt ist, daß der Bohrabschnitt (20) aus dem Vorderende (13) des Dübels axial vorsteht, wenn der Endanschlag (26) wirksam ist.

2. Bausatz nach Anspruch 1, dadurch gekennzeichnet, daß der Bohrabschnitt (20) in der Anschlagstellung (Figur 1) aus dem Dübel (1) mindestens um dessen axiale Länge vorsteht.

3. Bausatz nach Anspruch 1 oder 2, dadurch gekennzeichnet, daß der Kupplungsabschnitt (22) des Eindrehwerkzeugs (2) kürzer ist als die axiale Länge des Dübels (1).

4. Bausatz nach einem der Ansprüche 1 bis 3, dadurch gekennzeichnet, daß der Dübel (1) mit zwei diametral gegenüberliegenden achsparallelen Innennuten (15) zum formschlüssigen Eingriff des Kupplungsabschnitts (22) des Eindrehwerkzeugs (2) versehen ist.

5. Bausatz nach Anspruch 4, dadurch gekennzeichnet, daß die Axialöffnung (14) des Dübels (1) einen etwa kreuzförmigen freien Querschnitt hat, an den der Außenumfang des Kupplungsabschnitts (22) angepaßt ist.

6. Bausatz nach einem der Ansprüche 1 bis 5, dadurch gekennzeichnet, daß der Außendurchmesser des Gewindes (10) mehr als doppelt so groß wie der Außendurchmesser der Einsatzbuchse (12) ist.

7. Bausatz nach einem der Ansprüche 1 bis 6, dadurch gekennzeichnet, daß der Dübel (1) als Kunststoff-Spritzgießteil ausgebildet ist und das Eindrehwerkzeug (2) aus metallischem Werkstoff besteht.

8. Bausatz nach Anspruch 7, dadurch gekennzeichnet, daß das Eindrehwerkzeug (2) zumindest im Bereich des Bohrabschnitts (20), insbesondere dessen Spitze (21), gehärtet ist.

9. Bausatz nach einem der Ansprüche 1 bis 8, dadurch gekennzeichnet, daß das Eindrehwerkzeug (2) einen an den Kupplungsabschnitt (22) anschließenden Antriebsabschnitt (23) aufweist, an den ein Antriebswerkzeug, z.B. ein Schraubendreher oder einer Bohrfutter, ankuppelbar.

10. Bausatz nach Anspruch 9, dadurch gekennzeichnet, daß der Antriebsabschnitt als Mehrkant, vorzugsweise als Sechskant ausgebildet, auf der Eindrehachse (4) des Werkzeugs (2) zentriert ist und zumindest partiell über den anschließenden Kupplungsabschnitt (22) seitlich vorsteht, wodurch der Endanschlag (26) gebildet ist.

11. Bausatz nach Anspruch 9 oder 10, dadurch gekennzeichnet, daß das Eindrehwerkzeug (2) zwei axial beidseitig an den Antriebsabschnitt (23) anschließende Kupplungsabschnitte (22) aufweist.

12. Bausatz nach Anspruch 11, dadurch gekennzeichnet, daß ein Griff mit einer axialen Stekkaufnahme zur lösbaren Halterung wenigstens eines Teils des Antriebsabschnittes (23) vorgesehen ist.

13. Bausatz nach Anspruch 9 oder 10, dadurch gekennzeichnet, daß der Antriebsabschnitt (23) an einer Stirnfläche mit einem Schraubschlitz oder Kreuzschlitz (27) versehen ist.

14. Bausatz nach Anspruch 9, dadurch gekennzeichnet, daß der Antriebsabschnitt (23) des Eindrehwerkzeugs (2) als T-Griff ausgebildet ist.

15. Bausatz nach einem der Ansprüche 1 bis 14, dadurch gekennzeichnet, daß Kupplungsabschnitt und Bohrer (26) als axial verlaufende Klinge (20, 25) ausgebildet sind.

16. Eindrehwerkzeug zur Verwendung in dem Bausatz nach einem der Ansprüche 1 bis 12, dadurch gekennzeichnet, daß es einen Bohrabschnitt (20) mit einer Zentrierspitze (21), einem anschließenden Kupplungsabschnitt (22) mit wenigstens einer achsparallelen Abflachung und einem Schaft oder Antriebsabschnitt (23) aufweist und daß an der Übergangsstelle zwischen Kupplungs- und Schaftabschnitten eine im wesentlichen radiale Verdickung als Anschlag (26) zur Begrenzung der axialen Einstecktiefe des Eindrehwerkzeugs (2) ausgebildet ist.

17. Eindrehwerkzeug nach Anspruch 16, dadurch gekennzeichnet, daß an einen mittleren Antriebsabschnitt (23) zwei Kupplungsabschnitte (22) und wenigstens ein Bohrer (20) angeschlossen sind.

Fig.1

Fig. 2A

Fig. 2B

Fig.4

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| P,X | EP-A-0 425 358 (LEGRAND)  <br><br> * Spalte 6, Zeile 25 - Spalte 7, Zeile 56; Ansprüche 1,21; Abbildungen 1-14B * <br> --- | 1-3,6,7, 9,10,16 | F16B13/00 <br> F16B37/12 <br> F16B25/10 <br> B25B13/48 |
| A | US-A-3 289 290 (SANDOR) <br><br> * Spalte 1, Zeile 67 - Spalte 2, Zeile 11; Abbildungen 1,2 * <br> --- | 1,2,9, 13,16 | |
| D,A | EP-A-0 165 674 (ILLINOIS TOOL WORKS INC.) <br><br> ----- | - | |

|  |  |
|---|---|
| | **RECHERCHIERTE SACHGEBIETE (Int. Cl.5 )** |
| | F16B <br> B25B |

Der vorliegende Recherchenbericht wurde für alle Patentansprüche erstellt

| Recherchenort | Abschlußdatum der Recherche | Prüfer |
|---|---|---|
| DEN HAAG | 20 MAI 1992 | CALAMIDA G. |

EPO FORM 1503 03.82 (P0403)